Europäisches Patentamt

European Patent Office

Office européen des brevets

(19)

(11) Veröffentlichungsnummer: **0 009 134**
B1

(12) EUROPÄISCHE PATENTSCHRIFT

(45) Veröffentlichungstag der Patentschrift: 07.04.82

(51) Int. Cl.³: **A 01 D 35/264**

(21) Anmeldenummer: **79103128.9**

(22) Anmeldetag: **24.08.79**

(54) Mähwerk.

(30) Priorität: **13.09.78 DE 2839841**

(43) Veröffentlichungstag der Anmeldung:
**02.04.80 Patentblatt 80/7**

(45) Bekanntmachung des Hinweises auf die Patenterteilung:
**07.04.82 Patentblatt 82/14**

(84) Benannte Vertragsstaaten:
**AT CH FR GB IT NL**

(56) Entgegenhaltungen:
**DE - A1 - 2 461 748**
**DE - A1 - 2 730 146**
**DE - B - 1 657 047**
**GB - A - 1 452 308**
**GB - A - 1 489 373**

(73) Patentinhaber: **Klöckner-Humboldt-Deutz AG**
**Zweigniederlassung Fahr**
**D-7702 Gottmadingen (DE)**

(72) Erfinder: **Stelzle, Martin**
**Sieblerstrasse 10**
**D-7702 Gottmadingen (DE)**

(74) Vertreter: **Patentanwälte Leinweber &**
**Zimmermann**
**Rosental 7/II Aufg.**
**D-8000 München 2 (DE)**

## Mähwerk

Die Erfindung bezieht sich auf ein Mähwerk gemäss Oberbegriff des Anspruchs 1.

Aus der GB—A—1 452 308 ist ein Trommelmähwerk dieser Art bekannt, bei dem der Mähbalken seitlich am Maschinengestell abgestutet ist, was zu Verstopfungen führen kann.

Bei einem bekannten Mähwerk ähnlicher Art (DE—OS 24 61 748) befindet sich dagegen der Träger in einer in bezug zu einer durch den Mähbalken gelegten Vertikalebene nach rückwärts versetzten, parallelen Ebene. Zur Verbindung des Trägers mit dem Mähbalken sind einerseits am Träger und andererseits am Mähbalken starr befestigte horizontale Stützfüsse vertikaler Ständer vorgesehen. Diese Ausführrung ist einmal mit dem Nachteil verbunden, daß das abgeschnittene Gras an den Stützfuß-Ständer-Einheiten hängenbleiben kann, insbesondere wenn es sich un langes Gras handelt. Zum anderen muß zwischen die im Maschinengestell gelagerte Antriebswelle und die von ihr angetriebene Mähscheibenwelle ein Ausgleichskupplung eingeschaltet werden, die Fertigungstoleranzen berücksichtigt und etwaigen relativen Lageänderungen der Antriebswelle in bezug zur Mähscheibenwelle unter der Einwirkung außerer Kräfte im Maschineneinsatz Rechnung trägt.

Bei einem weiteren bekannten Scheibenmähwerk (DE—OS 27 30 146) ist der Träger Teil einer auch Bügel und Querarme umfassenden Schutzvorrichtung zum Schutz der Bedienungsperson ver den umlaufenden Messern und herausgeschleuderten Fremdkörpern. Der Träger erstreckt sich ausgehend von einem mit dem Mähbalken an seinem einen Ende fest verbundenen, am Maschinengestell befindlichen Getriebegehäuse oberhalb des Mähbalkens zu dessen anderem Ende, wo er über eine Stütze mit dem Mähbalken verbunden ist, die verhindert, daß sich der Träger freitragend über den Mähbalken mit den Mähscheiben hinweg erstreckt. Diese Stütze ist bogenförmig ausgebildet und greift auf der in bezug auf die Fahrtrichtung rückwärtigen Seite am Mähbalken an. Ganz abgesehen davon, daß bei dieser Ausführung dem Träger eine Tragfunktion für den Mähbalken abgesprochen werden muß, ist auch hier der Nachteil gegeben, daß das Mähgut insbesondere von der Stütze festgehalten wird, sich dort staut und zu Verstopfungen führt.

Der Erfindung liegt die Aufgabe zugrunde, das Mähwerk der eingangs genannten Art so weiter auszugestalten, daß eine wesentliche kräftemäßige Entlastung des Mähbalkens bei gleichzeitiger Vermeidung von die Funktion des Mähwerks beeinträchtigenden Verstopfungen durch das Mähgut erreicht ist.

Diese Aufgabe wird im wesentlichen dadurch gelöst, daß der Mähbalken mit dem Querjoch ausschließlich über die Antriebswelle und die Drehachse der äußeren Mähscheibe verbunden ist.

Der so gebildete Tragkörper kann die auf den Mähbalken einwirkenden Kräfte problemlos aufnehmen, so daß letzterer leichter dimensionierbar ist. Trotz der Anordnung des die Stabilität verleihenden Querjochs wird der Mähguttransport nicht durch Mähgutstau irgendwie behindert. Da das Querjoch zumindest mit seinem einen Ende über dem Maschinengestell, genauer gesagt oberhalb der Antriebswelle der ersten Mähscheibe endet, ist zudem die Möglichkeit gegeben, mit wenigen einfachen Handgriffen den gesamten, den Mähbalken umfassenden Tragkörper aus der Betriebsstellung um etwa 90° in eine Transportstellung zu verschwenken.

Als in baulicher Hinsicht besonders zweckmäßig hat es sich erwiesen, wenn die Antriebswelle der ersten Mähscheibe mit ihrem oberen Ende in einen nach abwärts ragenden zylindrischen Ansatz des Maschinengestells und mit ihrem unteren Ende in einem nach aufwärts ragenden zylindrischen Ansatz des Mähbalkens gelagert ist.

Dabei ist es inweiterer Ausgestaltung des erfindungsgemäßen Mähwerks besonders vorteilhaft, wenn das vertikale Stützteil des Querjochs einen nach abwärts ragenden zylindrischen Ansatz umfaßt, der als Lager für die nach oben vorstehende Drehachse der äußeren Mähscheibe ausgebildet ist.

Um beim Einsatz eines derartigen Mähwerks die Bildung von Schwaden zu ermöglichen, können mit dem Querjoch Träger für Seitenbleche verbunden sein. Diese können jedoch dann entfallen, wenn den jeweils äusseren Mähscheiben Begrenzungstrommeln zugeordnet sind, Diese werden zylindrisch, kegelig oder kegelstumpfförmig ausgebildet.

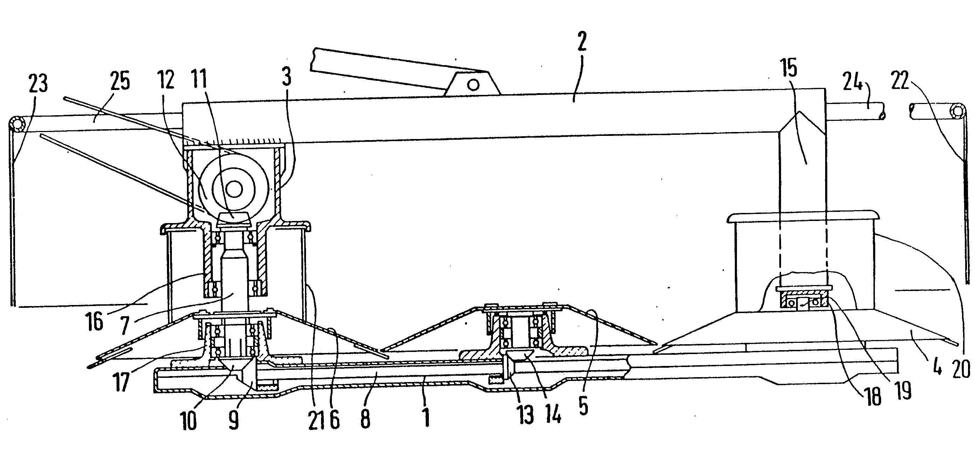

Weitere Einzelheiten, Vorteile und merkmale der Erfindung ergeben sich aus der folgenden Beschreibung anhand der einzigen Figur der Zeichnung, auf die bezüglich aller veranschaulichten wesentlichen Details ausdrücklich verwiesen wird. In der Zeichnung ist ein Ausführungsbeispiel des Scheibenmähwerks nach der Erfindung in Vorderansicht, teilweise im Schnitt, dargestellt.

Wie aus der Zeichnung ersichtlich, ist mit vertikalem Abstand oberhalb des Mähbalkens 1 eines Scheibenmähwerks ein Träger in Form eines biegesteifen Querjochs 2 angeordnet, das mit seinem einen Ende mit dem Maschinengestell 3 verbunden sit. Bei der in der Zeichnung veranschaulichten Ausführungsbeispiel sind auf der Oberseite des Mähbalkens 1 drei um etwa vertikale Achsen drehbar gelagerte Mähscheiben 4, 5 und 6 angeordnet. Diese Mähscheiben sind von einer vertikalen, koaxial zur Drehachse der dem Maschinengestell 3 zugeordneten Mähscheibe 6 liegenden, im Maschinengestell 3 gelagerten Welle 7 aus antreibbar. Zu diesem Zweck ist im Mähbalken eine Welle 8 gelagert, die über Kegelräder 9, 10 mit dem unteren Ende der Antriebswelle 7 gekuppelt ist, welche ihrerseits über Kegelräder 11, 12 auf nicht näher veranschaulichte Weise von der Zapfwelle eines Schleppers aus antreibbar ist. Kegelräder 13, 14 sorgen für einen Antrieb der mittelere Mähscheibe 5. Die äussere Mähscheibe 4 wird von der Welle 8 aus auf analoge Weise angetrieben.

Das vom Maschinengestell 3 abgewandte Ende des Querjochs 2 geht in ein konzentrisch zur äusseren Mähscheibe 4 liegendes vertikales Stützteil 15 über.

Die Antriebswelle 7 der ersten Mähscheibe 6 ist mit ihrem oberen Ende in einem nach abwärts ragenden zylindrischen Ansatz 16 des Maschinengestells 3 und mit ihrem unteren Ende in einem nach aufwärts ragenden zylindrischen Ansatz 17 des Mähbalkens 1 gelagert. Das vertikale Stützteil 15 des Querjochs 2 umfasst einen nach abwärts ragenden zylindrischen Ansatz 18, der als Lager für die nach oben vorstehende Drehachse 19 der äusseren Mähscheibe 4 ausgebildet ist. Die durch die Achse des Querjochs 2 verlaufende Vertikalebene deckt sich mit der Achse der Antriebswelle 7 und den Achsen der Mähscheiben 4, 5 und 6.

Den an den beiden Enden des Mähbalkens befindlichen äusseren Mähscheiben 4 und 6 sind zylindrische Begrenzungstrommeln 20 bzw. 21 zugeordnet. Stattdessen können zur Bildung je eines Schwades auch Seitenbleche 22 bzw. 23 an mit dem Querjoch 2 verbundenen Trägern 24 bzw. 25 vorgesehen sein.

Die veranschaulichte Ausführung mit lediglich drei Mähscheiben 4, 5 und 6 ist die Kleinstausführung. Zur Vergrösserung der Arbeitsbreite können Scheibenmähwerke mit entsprechend mehr Mähscheiben auf dem Mähbalken 1 Anwendung finden. Dabei ist das Querjoch 2 entsprechend der grösseren Ausdehnung des Mähbalkens 1 länger auszubilden.

## Patentansprüche

1. Mähwerk mit einem Mähbalken (1), auf dessen Oberseite mehrere, um etwa vertikale Achsen drehbar gelagerte Mähscheiben (4, 5, 6) angeordnet und von einer vertikalen, koaxial zur Drehachse einer der Mähscheiben liegenden, im Maschinengestell (3) gelagerten Welle (7) aus antreibbar sind, und mit einer der Festlegung des Mähbalkens (1) am Maschinengestell (3) dienenden Tragkörper, der einen sich im Abstand zum Mähbalken (1) erstreckenden Träger umfaßt, wobei der Träger in Form eines praktisch biegesteifen Querjochs (2) ausgebildet ist, das mit seinem einen Ende mit dem Maschinengestell (3) verbunden ist, wobei die Achse des Querjochs (2) die Achse der Antriebswelle (7) und die Achsen der Mähscheiben (4, 5, 6) schneidet und das andere ende des Querjochs (2) in ein koaxial zur äußeren Mähscheibe (4) liegendes Stützteil (15) übergeht, dadurch gekennzeichnet, daß der Mähbalken (1) mit dem Querjoch (2) ausschließlich über die Antriebswelle (7) und die Drehachse (19) der äußeren Mähscheibe (4) verbunden ist.

2. Mähwerk nach Anspruch 1, dadurch gekennzeichnet, daß die Antriebswelle (7) der ersten Mähscheibe (6) mit ihrem oberen Ende in einem nach abwärts ragenden zylindrischen Ansatz (16) des Maschinengestells (3) und mit ihrem unteren Ende in einem nach aufwärts ragenden zylindrischen Ansatz (17) des Mähbalkens (1) gelagert ist.

3. Mähwerk nach Anspruch 1, dadurch gekennzeichnet, daß das vertikale Stützteil (15) des Querjochs (2) einen nach abwärts ragenden zylindrischen Ansatz (18) umfaßt, der als Lager für die nach oben vorstehende Drehachse (19) der äußeren Mähscheibe (4) ausgebildet ist.

4. Mähwerk nach einem der Ansprüche 1 bis 3, dadurch gekennzeichnet, daß den an den beiden Enden des Mähbalkens (1) befindlichen Mähscheiben (46) Begrenzungstrommeln (20, 21) zugeordnet sind.

## Claims

1. A mowing unit with a cutter bar (1) on top of which there is a number of cutter disks (4, 5, 6), able to be turned from an upright shaft (7) about generally upright axes of turning, the shaft being coaxial to the xis of turning of one of the cutter disks and being bearinged in the machine frame (3), and with a support body for fixing the position of the cutter bar (1) on the machine frame (3), the support body having supports placed at a distance from the cutter bar (1), the cutter bar having the form generally of a stiff bridgepiece (2) which, generally speaking, has one end joined to the machine frame (3), the axis of the bridgepiece (2) cutting the axis of the driving shaft (7) and the axes of the cutter disks (4, 5, 6), and the other end of the bridgepiece (2) is joined up with a supporting part (15) which is coaxial with respect to the outer cutter disk (4), characterized in that the cutter bar (1) is joined up with the bridgepiece only by way of the driving shaft (7) and the shaft (19) of the outer cutter disk (4).

2. A mowing unit as claimed in claim 1, characterized in that the driving shaft (7) of the first cutter disk (6) has its top end placed in a downwardly running cylindrical head (16) of the machine frame (3), while its other end is bearinged in an upwardly running cylindrical head (17) on the cutter bar (1).

3. A mowing unit as claimed in claim 1, characterized in that the upper support part (15) of the bridgepiece (2) has a downwardly running cylindrical head (18) designed as a bearing for the upwardly running shaft (19) of the outer cutter disk (4).

4. A mowing unit as claimed in anyone of claims 1 to 3, characterized in that for the cutter disks (6). placed at the two ends of the cutter bar (1), there are limiting drums (20, 21).

**Revendications**

1. Faucheuse comprenant une barre coupeuse (1) sur la face supérieure de laquelle sont disposés plusieurs disques faucheurs (4, 5, 6) montés rotatifs autour d'axes verticaux, qui peuvent être entraînés par un arbre (7) vertical, monté coaxialement à l'axe de rotation de l'un des disques faucheurs précités et disposé dans le bâti (3) de la machine, et comprenant également un corps de support servant à fixer la barre coupeuse (1) sur le bâti (3) de la machine, qui comprend un support s'étendant à un certain écartement de ladite barre (1) et formé d'un portique (2) pratiquement rigide en flexion qui est relié par sa première extrémité au bâti (3) de la machine, l'axe du portique (2) venant en intersection de l'axe de l'arbre d'entraînement (7) et des axes des disques faucheurs (4, 5, 6), tandis que l'autre extrémité du portique (2) se prolonge en une pièce d'appui (15) disposée coaxialement au disque faucheur (4) extérieur, caractérisée en ce que la barre coupeuse (1) n'est reliée au portique (2) que par l'intermédiaire de l'arbre d'entraînement (7) et de l'axe de rotation (19) du disque faucheur extérieur (4).

2. Faucheuse selon la revendication 1, caractérisée en ce que l'arbre d'entraînement (7) du premier disque faucheur (6) est monté, par son extrémité supérieure, dans un prolongement cylindrique (16) en saillie vers le bas du bâti de la machine (3) et par son extrémité inférieure, dans un prolongement cylindrique (17) dépassant vers le haut de la barre coupeuse (1).

3. Faucheuse selon la revendication 1, caractérisée en ce que la pièce verticale (15) du portique (2) comprend un prolongement cylindrique (18) en saillie vers le bas qui sert de palier à l'axe de rotation (19) en saillie vers le haut du disque faucheur extérieur (4).

4. Faucheuse selon l'une des revendications 1 à 3, caractérisée en ce qu'aux disques faucheurs (4, 6) disposés aux deux extrémités de la barre coupeuse (1), sont associés des tambours de délimitation (20, 21).